(19) Europäisches Patentamt
European Patent Office
Office européen des brevets

(11) Veröffentlichungsnummer: **0 078 008**
**A2**

(12)
# EUROPÄISCHE PATENTANMELDUNG

(21) Anmeldenummer: **82109674.0**

(22) Anmeldetag: **20.10.82**

(51) Int. Cl.³: **C 09 B 62/00**
D 06 P 3/66

(30) Priorität: **28.10.81 DE 3142610**

(43) Veröffentlichungstag der Anmeldung:
**04.05.83 Patentblatt 83/18**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Schaffer, Ortwin, Dr.**
**Bruesseler Ring 43**
**D-6700 Ludwigshafen(DE)**

(72) Erfinder: **Bergmann, Udo, Dr.**
**Merckstrasse 26**
**D-6100 Darmstadt(DE)**

(72) Erfinder: **Disteldorf, Walter, Dr.**
**Portugieser Weg 17**
**D-6706 Wachenheim(DE)**

(54) **Reaktivfarbstoffe.**

(57) Die Erfindung betrifft Verbindungen der allgemeinen Formel I

$$HOOC-(CH_2)_m-Y-(CH_2)_n-\overset{O}{\overset{\|}{C}}-NR-(A)-X$$

sowie deren Metallkomplexe, wobei
A der Rest eines Mono- oder Disazofarbstoffes,
m 1 oder 2,
n 1 oder 2,
R Wasserstoff, $C_1$- bis $C_4$-Alkyl, β-Hydroxyethyl oder β-Cyanethyl,
Y Sauerstoff, Schwefel oder eine $SO_2$-Gruppe und
X ein faserreacktiver Rest sind.

Die erfindungsgemäßen Verbindungen eignen sich vorzugsweise zum Färben von Baumwolle und ergeben Färbungen mit guten Echtheiten.

EP 0 078 008 A2

## Reaktivfarbstoffe

Die Erfindung betrifft Verbindungen der allgemeinen Formel I

$$HOOC-(CH_2)_m-Y-(CH_2)_n-\overset{O}{\overset{\|}{C}}-NR-[A]-X$$

sowie deren Metallkomplexe, wobei

A der Rest eines Mono- oder Disazofarbstoffes,

m 1 oder 2,

n 1 oder 2,

R Wasserstoff, $C_1$- bis $C_4$-Alkyl, ß-Hydroxyethyl oder ß-Cyanethyl,

Y Sauerstoff, Schwefel oder eine $SO_2$-Gruppe und

X ein faserreaktiver Rest sind.

Die Reste A entsprechen insbesondere den Formeln

$$D-N=N-K\langle \quad \text{oder} \quad -D^1-N=N-K^1-$$

wobei die freien Valenzen den Resten $-\underset{R}{N}-CO-(CH_2)_n-Y-(CH_2)_m-COOH$ und X zugeordnet sind.

Die Diazokomponenten $D-NH_2$ stammen vorwiegend aus der Anilin- und Aminonaphthalinreihe und können als Substituenten z. B. Fluor, Chlor, Brom, Methyl, Ethyl, Methoxy, Ethoxy, Hydroxy, Alkoxycarbonyl, Carboxy, Cyan, Nitro, Acylamino und insbesondere Sulfogruppen tragen. Alkoxycarbonylreste haben vorzugsweise 1 bis 4 C-Atome, im einzelnen seien beispielsweise $COOCH_3$, $COOC_2H_5$, $COOC_3H_7$ (n- oder i-), $COOC_4H_9$ (n- oder i-) und

$COOCH_2CH\genfrac{}{}{0pt}{}{C_2H_5}{C_4H_9}$ genannt.

Bg/P

Einzelne Acylaminoreste sind z. B. HCONH, $CH_3CONH$, $C_2H_5CONH$ oder $HOOC-(CH_2)_m-Y-(CH_2)_n-CONH$.

Einzelne Diazokomponenten $DNH_2$ sind beispielsweise:

Anilin, 2,3- oder 4-Toluidin, 2-, 3- oder 4-Anisidin, 2-, 3- oder 4-Sulfoanilin, 2-Sulfo-4-methylanilin, 2-Sulfo-4-chloranilin, 2-Sulfo-4-methoxyanilin, 3-Sulfo-4-methoxy-anilin, 2-Sulfo-4-nitroanilin, 2-Nitro-4-sulfoanilin, 2-Sulfo-3-acetamino-anilin, 2-Sulfo-4-acetaminoanilin, 2-, 3- oder 4-Carboxyanilin, 2- oder 4-Methoxycarbonylanilin, 2- oder 4-Cyananilin, 3,5-Dicarboxyanilin, 2-Carboxy-4-sulfoanilin, 2-Carboxy-5-sulfoanilin, 2,4-, 2,5- oder 3,5-Disulfoanilin, 1-Naphthylamin, 1-Naphthylamin-4-, 5-, 6- oder 7-sulfonsäure, 1-Naphthylamin-3,6- oder 3,7-disulfonsäure, 1-Naphthylamin-4,7- oder 4,8-disulfonsäure, 1-Naphthylamin-3,6,8- oder 4,6,8-trisulfonsäure, 2-Naphthylamin-6-nitro-4,8-disulfonsäure, 2-Naphthylamin-6-acylamino-4,8-disulfonsäure, 2-Naphthylamin-1-, 5-, 6-, 7- oder 8-sulfonsäure, 2-Naphthylamin-1,5-, 3,5- oder 4,8-disulfonsäure, 2-Naphthylamin-5,6- oder 6,8-disulfonsäure, 2-Naphthylamin-1,5,7-, 3,6,8- oder 4,6,8-trisulfonsäure oder 2-Sulfo-4-(4'-sulfo)-phenylazoanilin.

Die Diazokomponenten $D^1$ können sowohl den Rest X als auch den Rest $-NH-CO-(CH_2)_n-Y-(CH_2)_m-COOH$ und als weitere Substituenten z. B. Chlor, Methyl, Methoxy, Carboxy, Ethoxycarbonyl, Aminocarbonyl, Hydroxyl oder Sulfo tragen.

Einzelne Diazokomponentenreste $-D^1NH_2$ sind z. B.:

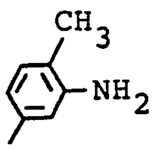 , 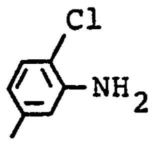 , 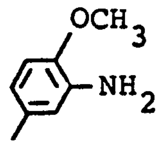 , 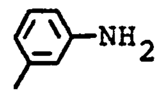 , 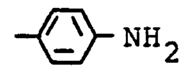 ,

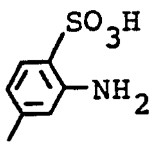 , 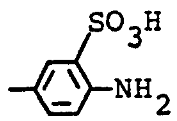 , 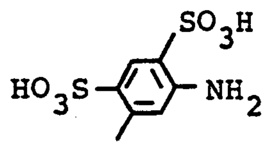 , 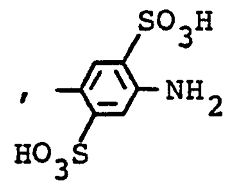 ,

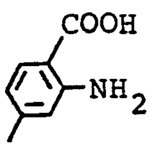 , 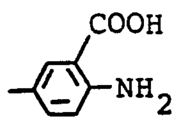 , 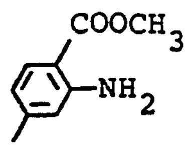 , 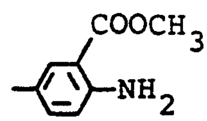 ,

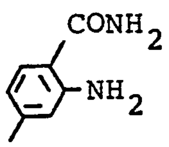 , 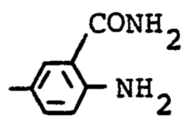 , 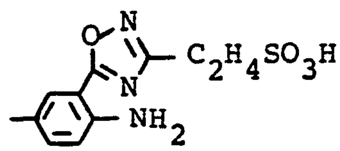 ,

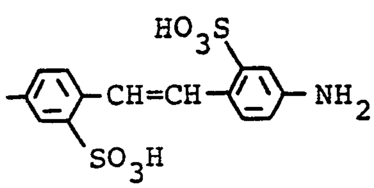 , 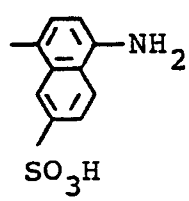 , 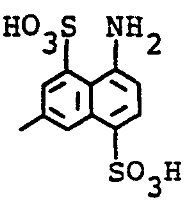 , 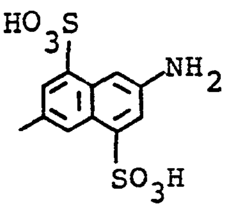 ,

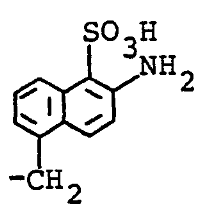 , 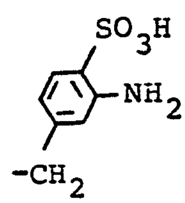 , 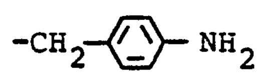 , 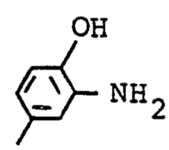 ,

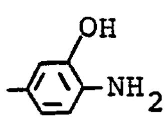 , 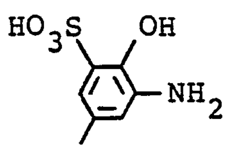 , 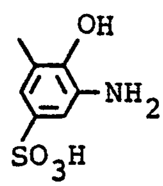 , 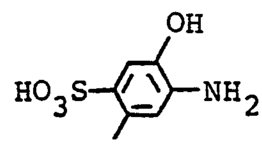 sowie

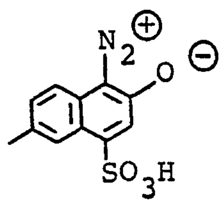 .

Kupplungskomponentenreste K stammen vorwiegend aus der Anilinreihe, sie entsprechen den Formeln

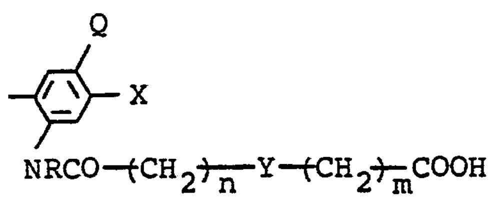 oder

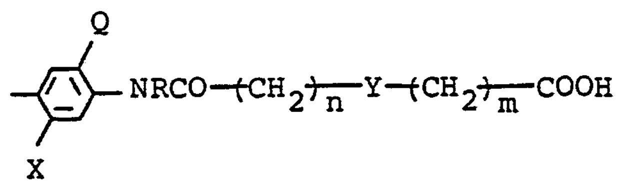 , in denen

Q Wasserstoff, Chlor, Methyl, Methoxy oder Alkoxycarbonyl ist und

X, R, Y, m und n die angegebene Bedeutung haben.

Reste $K^1$ stammen vorwiegend aus der Anilin-, Naphthylamin-, Pyrazolon- und vorzugsweise Aminonaphtholreihe. Als Substituenten sind beispielsweise Chlor, Methyl, Methoxy, Carboxy, Alkoxycarbonyl, Nitro oder Acylamino und insbesondere Sulfo zu nennen.

Einzelne Kupplungskomponentenreste $K^1$ sind z. B.:

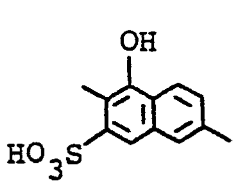 , 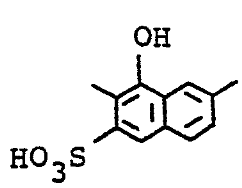 , 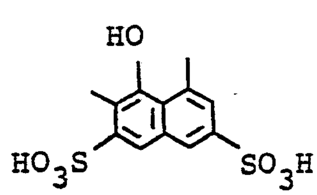 ,

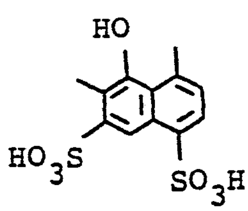 , 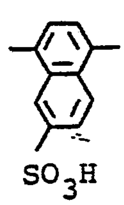 , 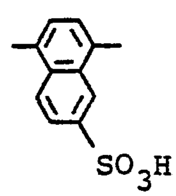 , 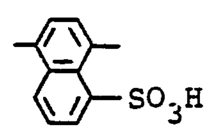 ,

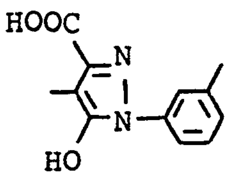 , 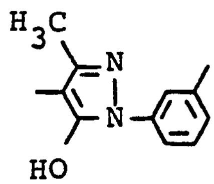 , 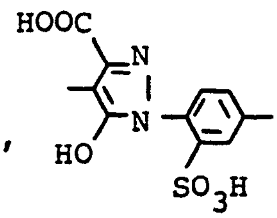 oder

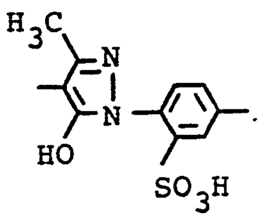 .

Die faserreaktiven Reste X können sowohl in der Diazo- als auch Kupplungskomponente stehen. Reaktive Reste im Sinne der Erfindung sind alle Gruppen, die in Reaktivfarbstoffen zur Herstellung einer kovalenten Bindung mit dem Substrat befähigt sind. Diese Gruppen leiten sich insbesondere von Triazinen, Pyrimidinen, Chinoxalinen, Chinazolinen, Vinylsulfonen oder Vorstufen davon, Acrylverbindungen, Halogenpropionylverbindungen, Halogenacetylverbindungen oder Säuren des Phosphors ab.

Die reaktiven Reste X können beispielsweise direkt oder über eine Imino-, Methylimino-, Äthylimino-, Oxäthylimino-, Cyanäthylimino-, Sulfomethylenimino-, Carboxymethylenimino-, Iminomethylen- oder Methyliminomethylenbrücke an den Farbstoff gebunden sein. Sie leiten sich z. B. von folgenden Verbindungen ab:

Acryloylchlorid, ß-Chlorpropionylchlorid, ß-Brompropionylchlorid, Chloracetylchlorid, 2,3-Dichlorchinoxalin-5- oder 6-carbonylchlorid, 2,3-Dichlorchinazolin-5- oder 6-sulfonylchlorid, 2,4,6-Trichlorpyrimidin, 2,4,6-Trichlor-5-methylpyrimidin, 2,4,5,6-Tetrachlorpyrimidin, 2,4,6-Trifluorpyrimidin, 2,4,6-Trifluor-5-chlorpyrimidin.

Insbesondere seien genannt:

Cyanurfluorid, Cyanurchlorid, Cyanurbromid, 2,4-Dichlor-6-methyl-triazin, 2,4-Dichlor-6-phenyltriazin sowie die primären Kondensationsprodukte von Cyanurchlorid und Cyanurfluorid mit Ammoniak, Hydrazin, Hydroxylamin, Aminen, organ. Hydroxy- und Mercaptoverbindungen, also z. B.: Methanol, Äthanol, Phenol, α- und ß-Naphthol, Chlorphenole, Kresole, sulfonierte Phenole, Thiophenol, Thioglykolsäure, Methylmercaptan, Thioacetamid, primäre oder sekundäre Alkylamine, wie z. B. Methylamin, Äthylamin n- und i-Propylamin, Dimethylamin, Diäthylamin, ß-Hydroxyäthylamin, Di-(ß-hydroxyäthyl)amin, ß-Chloräthylamin, ß-Cyanäthylamin, ß-Methoxyäthylamin, Aminodiglykol, Aminotriglykol, Aminoessigsäure, N-Methylaminoessigsäure, Taurin, N-Methyltaurin, Piperidin, Morpholin, Aminoäthylmorpholin, N-Methylpiperazin, Cyclohexylamin, Anilin, N-Methylanilin, N-Oxyäthylanilin, N-Äthylanilin, Toluidin, Anisidin, Chloranilin, Cyananilin, Anilin-o-, m- und p-sulfonsäure, Anilin-2,4-, 2,5- und 3,5-disulfonsäure, N-Methylanilin-o-, m- und p-sulfonsäure, o-, m- und p-Aminobenzoesäure, N-Methylanthranilsäure, Anthranilsäuremethylester, 4- und 5-Sulfo-aminobenzoesäure, 2-Aminotoluol-4-sulfonsäure, 5-Amino-2-hydroxybenzoesäure, Aminoäthylschwefelsäure und Mono- und Disulfonsäuren von 1-Amino- und 2-Aminonaphthalin.

Weiterhin seien genannt:

m-, p-Hydroxyäthylsulfonylanilin, m-, p-Sulfatoäthylsulfonylanilin, m-, p-Chloräthylsulfonylanilin und Vinylsulfonylanilin.

Die neuen Farbstoffe sind vorwiegend gelb bis rot und eignen sich vorzüglich für die verschiedenen Reaktivfärbeverfahren. Man erhält Färbungen auf hydroxylgruppenhaltigen

Fasermaterialien, insbesondere Baumwolle, die sich durch hohe Brillanz, Farbstärke, Licht- und Naßechtheiten auszeichnen.

In den folgenden Beispielen beziehen sich Angaben über Teile und Prozente, sofern nicht anders vermerkt, immer auf das Gewicht.

Beispiel 1

11 Teile 1-(4'-Aminophenyl)-3-carboxy-5-pyrazolon werden in 120 Teilen N-Methylpyrrolidon suspendiert und auf 70 °C erwärmt, 13,2 Teile Thiodiessigsäureanhydrid portionsweise zugesetzt und das Reaktionsgemisch zwei Stunden bei dieser Temperatur gehalten. Die klare Reaktionslösung wird mit Eis auf 0 - 5 °C gekühlt und das salzsauer diazotierte Reaktionsgemisch aus 9,4 Teilen 1,3-Phenylendiamin-4-sulfonsäure und 9,5 Teilen Cyanurchlorid eingetragen. Man kuppelt unter Zusatz von 16,6 Teilen Natriumhydrogencarbonat bei pH 5 - 6 aus, fügt 3 Teile Natriumdihydrogenphosphat und 3,6 Teile Dinatriumhydrogenphosphat zu und fällt mit Siedesalz. Der Preßkuchen wird gefriergetrocknet. Man erhält ein orangegelbes Pulver, das Baumwolle in brillanten gelben Tönen mit guter Lichtechtheit färbt.

Beispiel 2

Einen Farbstoff mit ähnlichen Eigenschaften und gleicher Farbnuance erhält man, wenn man das in Bsp. 1 verwendete Thiodiessigsäureanhydrid durch 11,6 Teile Diglykolsäureanhydrid ersetzt.

Die Farbstoffe entsprechen der allgemeinen Formel

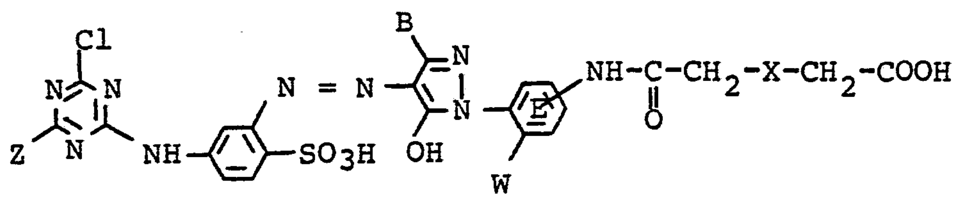
,

in der Z = Chlor, B = Carboxy, W = Wasserstoff, X = Schwefel oder Sauerstoff ist und die Acylaminogruppe im Phenylring E des Pyrazolons in 4'-Stellung steht.

Weitere Farbstoffe, die auf einem der oben beschriebenen Wege erhalten werden können und die obiger allgemeiner Formel entsprechen, sind in Tabelle 1 zusammengefaßt.

Tabelle 1

| Bsp. | Z | B | X | W | Verknüpfung im Ring E | Farbton |
|---|---|---|---|---|---|---|
| 3 | $NH_2$ | $CH_3$ | S | H | 1',3' | gelb |
| 4 | 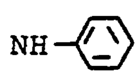 | COOH | S | $SO_3H$ | 1',3' | gelb |
| 5 | 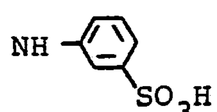 | $CH_3$ | O | $CH_3$ | 1',4' | gelb |
| 6 | 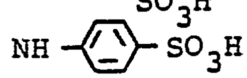 | COOH | S | $CH_3$ | 1',4' | gelb |
| 7 | 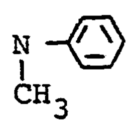 | COOH | O | H | 1',3' | gelb |

Beispiel 8

24 Teile 3-Amino-8-hydroxynaphthalin-6-sulfonsäure werden in 240 Teilen N-Methylpyrrolidon suspendiert, auf 80 °C erwärmt, 26,4 Teile Thiodiessigsäureanhydrid portionsweise zugesetzt und das Reaktionsgemisch zwei Stunden bei dieser Temperatur gehalten. Man kühlt mit Eis auf 0 - 5 °C, fügt die klare Lösung zum salzsauer diazotierten Kondensationsprodukt aus 19 Teilen Cyanurchlorid und 18,8 Teilen 1,3-Phenylendiamin-4-sulfonsäure und kuppelt unter Zusatz von 5,2 Teilen Natriumacetat und 16,4 Teilen Natriumbikarbonat aus. Dem neutralisierten Reaktionsgemisch werden 7,2 Teile Dinatriumhydrogenphosphat und 6 Teile Natriumdihydrogenphosphat zugefügt und der Farbstoff mit Siedesalz gefällt. Der Preßkuchen wird sprühgetrocknet. Man erhält ein orangefarbenes Pulver, das Baumwolle in brillanten Orangetönen mit sehr guter Naß- und Lichtechtheit färbt.

Beispiel 9

Einen Farbstoff mit ähnlichen Eigenschaften und in gleicher Nuance erhält man, wenn man das in Beispiel 8 verwendete Thiodiessigsäureanhydrid durch 23,2 Teile Diglykolsäureanhydrid ersetzt.

Beispiel 10

12 Teile 2-Amino-8-hydroxynaphthalin-6-sulfonsäure werden bei 80 °C in 120 Teilen N-Methylpyrrolidon suspendiert und 13,2 Teile Thiodiessigsäureanhydrid portionsweise zugefügt. Man hält das Reaktionsgemisch zwei Stunden bei dieser Temperatur und kühlt anschließend die klare Lösung

mit Eis auf 0 - 5 °C.

16,8 Teile des salzsauer diazotierten primären Kondensationsproduktes aus 1,3-Phenylendiamin-4-sulfonsäure und Cyanurchlorid werden zugefügt. Man kuppelt unter Zugabe von 4,1 Teilen Natriumacetat und 12,5 Teilen Soda aus, versetzt das neutralisierte Reaktionsgemisch mit 3,6 Teilen Dinatriumhydrogenphosphat und 3 Teilen Natriumdihydrogenphosphat und fällt mit Siedesalz. Das Preßgut wird gefriergetrocknet. Man erhält ein rotes Pulver, das Baumwolle in brillanten scharlachroten Tönen mit guter Naßechtheit färbt.

Beispiel 11

Einen Farbstoff mit ähnlichen Eigenschaften und in gleicher Nuance erhält man, wenn man das in Beispiel 10 verwendete Thiodiessigsäureanhydrid durch 11,6 Teile Diglykolsäureanhydrid ersetzt.

Die in den Beispielen 8 bis 11 aufgeführten Farbstoffe entsprechen der allgemeinen Formel

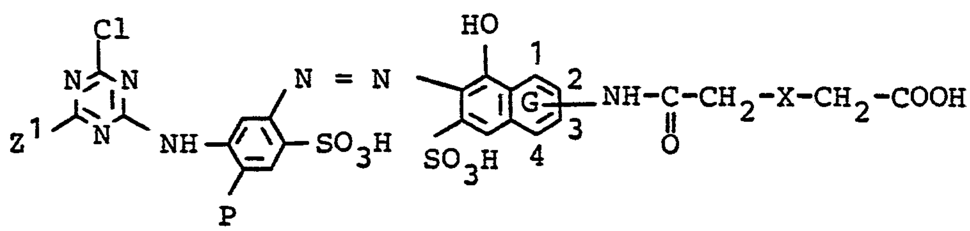 ,

in der $Z^1$ = Chlor, P = Wasserstoff, X = Schwefel bzw. Sauerstoff ist und die Acylaminogruppe im Naphthalinkern G in 2- bzw. 3-Stellung steht. Weitere Farbstoffe, die auf einem der oben beschriebenen Wege erhalten werden können und die obiger allgemeiner Formel entsprechen, sind in

Tabelle 2 zusammengefaßt:

Tabelle 2

| Bsp. | $Z^1$ | P | Verknüpfung im Ring G | X | Farbton |
|---|---|---|---|---|---|
| 12 | $NH_2$ | H | 3- | S | orange |
| 13 | 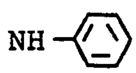 | $SO_3H$ | 3- | O | orange |
| 14 | 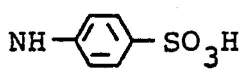 | H | 3- | S | orange |
| 15 | 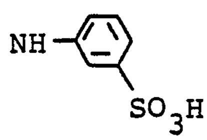 | H | 3- | O | orange |
| 16 | 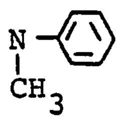 | $SO_3H$ | 3- | S | orange |
| 17 | 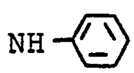 | $SO_3H$ | 2- | O | scharlachrot |
| 18 | $NH_2$ | H | 2- | S | scharlachrot |
| 19 | 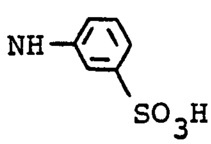 | H | 2- | S | scharlachrot |
| 20 | 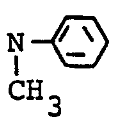 | $SO_3H$ | 2- | O | scharlachrot |

Beispiel 21

45 Teile des Kondensationsproduktes aus 31,9 Teilen 1-Amino-8-hydroxynaphthalin-3,6-disulfonsäure und 26,4 Teilen Thiodiessigsäureanhydrid werden in Eiswasser neutral gelöst, 8,2 Teile Natriumacetat zugefügt und die salzsauer diazotierte Suspension von 33,6 Teilen des primären Kondensationsproduktes aus 1,3-Phenylendiamin-4-sulfonsäure und Cyanurchlorid zugesetzt. Man kuppelt bei 0 - 5 °C und pH 5 unter Zugabe von 18,4 Teilen Natriumbikarbonat aus. Das neutralisierte Reaktionsgemisch wird mit 7,2 Teilen Dinatriumhydrogenphosphat und 6 Teilen Natriumdihydrogenphosphat versetzt und sprühgetrocknet. Man erhält ein dunkelrotes Pulver, das Baumwolle in brillanten blaustichig roten Tönen färbt.

Beispiel 22

Ersetzt man das in Beispiel 21 verwendete Thiodiessigsäureanhydrid durch 23,2 Teile Diglykolsäureanhydrid, so erhält man einen Farbstoff in gleicher Nuance und ähnlichen Eigenschaften.

Beispiel 23 + 24

Ersetzt man die in Beispiel 21 und 22 verwendete 1-Amino-8-hydroxynaphthalin-3,6-disulfonsäure durch 1-Amino-8-hydroxynaphthalin-4,6-disulfonsäure, so erhält man Farbstoffe, die Baumwolle in brillanten gelbstich roten Tönen färben.

Die in den Beispielen 21 bis 24 genannten Farbstoffe entsprechen der allgemeinen Formel

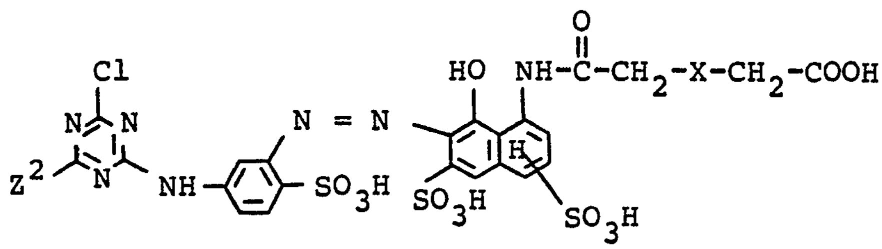

,

in der $Z^2$ = Chlor, X = Schwefel oder Sauerstoff und die Sulfogruppe im Naphthalinkern H in 3- bzw. 4-Stellung steht. Weitere Farbstoffe, die auf einem der oben beschriebenen Wege erhalten werden können und die obiger allgemeiner Formel entsprechen, sind in Tabelle 3 zusammengefaßt.

Tabelle 3

| Bsp. | $Z^1$ | X | Verknüpfung im Ring H | Farbton |
|---|---|---|---|---|
| 25 | 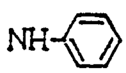 | O | 4- | gelbstichig rot |
| 26 | $NH_2$ | S | 3- | blaustichig rot |
| 27 | $NH_2$ | O | 3- | blaustichig rot |
| 28 | $NH_2$ | S | 4- | gelbstichig rot |
| 29 | $NH_2$ | O | 4- | gelbstichig rot |

Beispiel 30

31,5 Teile 2-Chloracetylamino-5-hydroxynaphthalin-7-sulfonsäure werden neutral in 400 Teilen Wasser angerührt und 100 Teile einer Lösung von 16 Teilen Thioglykolsäure bei pH 7,5 in Wasser zugefügt. Es wird bis zur vollständigen

Umsetzung mehrere Stunden bei 50 - 60 °C und pH 7,5 gerührt, anschließend werden 9,5 Teile Chloressigsäure zugefügt und weiter eine Stunde bei 60 °C und pH 7,5 gerührt. Das Reaktionsgemisch wird mit Eis auf 0 - 5 °C gekühlt, 8,2 Teile Natriumacetat zugesetzt und die salzsauer diazotierte Suspension von 33,6 Teilen des primären Kondensationsproduktes aus 1,3-Phenylendiamin-4-sulfonsäure und Cyanurchlorid eingetragen. Man kuppelt unter Zugabe von 8,5 Teilen Natriumbikarbonat und 10,5 Teilen Soda bei pH 6 aus, fügt 7,2 Teile Dinatriumhydrogenphosphat und 6 Teile Natriumdihydrogenphosphat zu, fällt den Farbstoff mit Siedesalz aus und trocknet schonend. Der Farbstoff entspricht in Konstitution und Eigenschaften dem in Beispiel 8 genannten.

Beispiel 31

Ersetzt man die in Beispiel 30 genannte 2-Chloracetylamino-5-hydroxynaphthalin-7-sulfonsäure durch 2-Chloracetylamino-8-hydroxynaphthalin-6-sulfonsäure, so erhalt man einen Farbstoff, der dem in Beispiel 10 genannten in Konstitution und Eigenschaften entspricht.

Beispiel 32

39,5 Teile 1-Chloracetylamino-8-hydroxynaphthalin-3,6-disulfonsäure werden in 400 Teilen Wasser bei pH 7 vorgelegt und 100 Teile einer Lösung von 16 Teilen Thioglykolsäure bei pH 7,5 in Wasser zugefügt. Man rührt mehrere Stunden bei 50 °C und pH 7,5 bis zur vollständigen Umsetzung. Anschließend werden 9,5 Teile Chloressigsäure zugesetzt und eine weitere Stunde bei 50 °C gerührt. Durch Zugabe von Eis wird auf 0 - 5 °C gekühlt, 8,2 Teile Natriumacetat

zugesetzt und die salzsauer diazotierte Suspension von 33,6 Teilen des primären Kondensationsproduktes aus 1,3-Phenylendiamin-4-sulfonsäure und Cyanurchlorid zugefügt. Man kuppelt durch Zugabe von 8,6 Teilen Natriumbikarbonat und 10,2 Teilen Soda bei pH 6 aus, setzt 7,2 Teile Dinatriumhydrogenphosphat und 6 Teile Natriumdihydrogenphosphat zu und fällt den Farbstoff durch Zugabe von Siedesalz aus. Das Preßgut wird sprühgetrocknet. Der erhaltene Farbstoff entspricht in Konstitution und Eigenschaften dem in Beispiel 21 genannten.

Beispiel 33

32,9 Teile 3-(ß-Chlorpropionylamino)-8-hydroxynaphthalin-6-sulfonsäure werden neutral in 400 Teilen Wasser vorgelegt und 150 Teile einer Lösung von 32 Teilen Thioglykolsäure bei pH 7,5 in Wasser zugesetzt. Man hält mehrere Stunden bei diesem pH-Wert und 70 °C bis zur vollständigen Umsetzung. Anschließend werden 28,5 Teile Chloressigsäure zugegeben, zwei Stunden bei 60 °C und pH 7,5 gerührt, mit Eis auf 0 - 5 °C gekühlt und das Reaktionsgemisch mit 8,2 Teilen Natriumacetat versetzt. Man trägt die salzsauer diazotierte Suspension von 33,6 Teilen des primären Kondensationsproduktes aus 1,3-Phenylendiamin-4-sulfonsäure und Cyanurchlorid ein und kuppelt bei pH 6 mit 10,2 Teilen Natriumbikarbonat und 9,8 Teilen Soda aus. 7,2 Teile Dinatriumhydrogenphosphat und 6 Teile Natriumdihydrogenphosphat werden eingetragen, der Farbstoff mit Siedesalz gefällt und gefriergetrocknet. Man erhält ein orangebraunes Pulver, das Baumwolle in brillanten Orangetönen mit guter Lichtechtheit färbt.

Beispiel 34

Ersetzt man die in Beispiel 33 verwendete 3-(ß-Chlorpropionylamino)-8-hydroxynaphthalin-6-sulfonsäure durch 2-(ß-Chlorpropionylamino)-8-hydroxynaphthalin-6-sulfonsäure, so erhält man einen Farbstoff, der Baumwolle in brillanten, scharlachroten Tönen färbt.

Die in den Beispielen 33 und 34 genannten Farbstoffe entsprechen der allgemeinen Formel

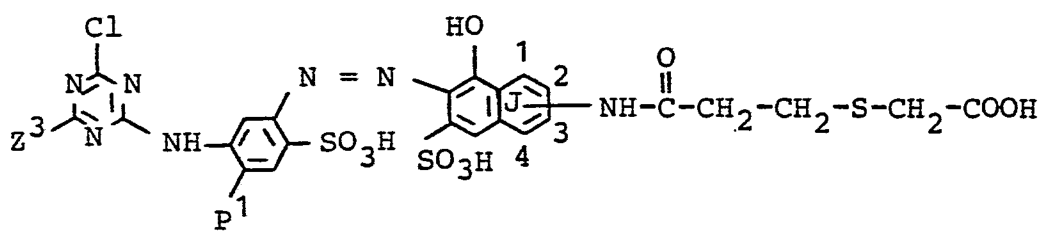
,

in der $Z^3$ = CHlor, $P^1$ = Wasserstoff ist und die Acylaminogruppe im Naphthalinkern J in 3- bzw. 2-Stellung steht.

Beispiel 35

24 Teile 3-Amino-8-hydroxynaphthalin-6-sulfonsäure werden in 400 Teilen Wasser neutral gelöst, 16,5 Teile Natriumacetat zugefügt und mit Eis auf 0 °C gekühlt. Zum Reaktionsgemisch werden portionsweise insgesamt 14,5 Teile Thiodiessigsäureanhydrid gegeben und bei 0 - 5 °C bis zur vollständigen Umsetzung gerührt. Der Reaktionslösung werden 33,6 Teile des salzsauer diazotierten primären Kondensationsproduktes aus 1,3-Phenylendiamin-4-sulfonsäure und Cyanurchlorid zugesetzt und unter Zugabe von 18 Teilen Natriumbikarbonat und 7,5 Teilen Soda wird bei pH 5,5 ausgekuppelt. Man neutralisiert, fügt dem Reaktionsgemisch 7,2 Teile Dinatriumhydrogenphosphat und 6 Teile Natriumdihydrogenphosphat zu und fällt den Farbstoff mit Siedesalz. Er entspricht in Konstitution und Eigenschaften dem in Beispiel 8 und 30 genannten.

Beispiel 36

12 Teile 2-Amino-8-hydroxynaphthalin-6-sulfonsäure werden in 200 Teilen Wasser gelöst, 8,2 Teile Natriumacetat zugesetzt und mit Eis auf 0 °C gekühlt. 7,3 Teile Thioessigsäureanhydrid werden portionsweise zugegeben und bis zur vollständigen Umsetzung bei 0 - 5 °C gerührt. Man versetzt das Reaktionsgemisch mit dem salzsauer diazotierten Kondensationsprodukt aus 9,4 Teilen 1,3-Phenylendiamin-4-sulfonsäure und 9,5 Teilen Cyanurchlorid und kuppelt unter Zusatz von 5,3 Teilen Natriumbikarbonat und 10,4 Teilen Soda aus. Das neutralisierte Reaktionsgemisch wird mit 3,6 Teilen Diantriumhydrogenphosphat und 3 Teilen Natriumdihydrogenphosphat versetzt, der Farbstoff mit Siedesalz gefällt und schonend getrocknet. Man erhält ein rotes Pulver, das in Konstitution und Eigenschaften dem in Beispiel 10 und 31 genannten Farbstoff entspricht.

Beispiel 37

16 Teile 1-Amino-8-hydroxynaphthalin-3,6-disulfonsäure werden in 200 Teilen Wasser neutral gelöst, 8,2 Teile Natriumacetat zugefügt und mit Eis auf 0 °C gekühlt. Portionsweise werden 7,3 Teile Thiodiessigsäureanhydrid eingetragen und bis zur vollständigen Umsetzung bei 0 - 5 °C gerührt. Man fügt 16,8 Teile des salzsauer diazotierten primären Kondensationsproduktes aus 1,3-Phenylendiamin-4-sulfonsäure und Cyanurchlorid zu und kuppelt

bei 0 - 5 °C und pH 5 bis 6 unter Zugabe von 8,2 Teilen Natriumbikarbonat und 7,4 Teilen Soda aus. Dem neutralisierten Reaktionsgemisch werden 3,6 Teile Dinatriumhydrogenphosphat und 3 Teile Natriumdihydrogenphosphat zugesetzt, der Farbstoff mit Siedesalz ausgefällt und gefriergetrocknet. Man erhält ein dunkelrotes Pulver, das in Konstitution und Eigenschaften dem in Beispiel 21 und 32 genannten Farbstoff entspricht.

Patentansprüche

1. Reaktivfarbstoffe der allgemeinen Formel

$$HOOC-(CH_2)_m-Y-(CH_2)_n-\overset{O}{\overset{\|}{C}}-NR-[A]-X$$

sowie deren Metallkomplexe, wobei

A der Rest eines Mono- oder Disazofarbstoffes,

m 1 oder 2,

n 1 oder 2,

R Wasserstoff, $C_1$- bis $C_4$-Alkyl, ß-Hydroxyethyl oder ß-Cyanethyl,

Y Sauerstoff, Schwefel oder eine $SO_2$-Gruppe und

X ein faserreaktiver Rest sind.

2. Verwendung der Verbindungen gemäß Anspruch 1 zum Färben hydroxylgruppenhaltiger Fasern, insbesondere von Baumwolle.

3. Farbstoff gemäß Anspruch 1, bei dem m = 2 ist.

4. Farbstoff gemäß Anspruch 1, bei dem n = 2 ist.

5. Farbstoff gemäß Anspruch 1, bei dem Y Sauerstoff oder Schwefel ist.

6. Farbstoff gemäß Anspruch 1, bei dem R Wasserstoff oder Methyl ist.

7. Farbstoff gemäß Anspruch 1, bei dem X ein reaktiver Rest der Triazin-, Pyrimidin-, Pyridazon- oder Vinylsulfonylreihe ist.

8. Farbstoff gemäß Anspruch 1, bei dem A der Rest eines Monoazofarbstoffes ist.

9. Farbstoff gemäß Anspruch 1, bei dem A der Rest eines Phenylazonaphthyl-Farbstoffes ist.

10. Farbstoff gemäß Anspruch 1, bei dem A der Rest eines Phenylazonaphthyl-Farbstoffes ist und der Rest X an die Diazokomponente gebunden ist.